# EUROPEAN PATENT APPLICATION

(11) **EP 2 634 728 A1**
(43) Date of publication of application: **04.09.2013**
(21) Application number: 10859029.0
(22) Date of filing: 29.10.2010
(51) Int. Cl.: G06K 9/62

(54) **IRIS IDENTIFICATION METHOD OF A PERSON (ALTERNATIVES)**

(71) Applicant: Antonov, Dmitry Evgenievich, Moscow 125040 (RU)
(72) Inventor: Antonov, Dmitry Evgenievich, Moscow 125040 (RU)
(74) Representative: HOFFMANN EITLE
(86) International application number: PCT/RU2010/000640
(87) International publication number: WO 2012/057645

(57) **Abstract**

The present inventions are aimed at improving accuracy and speed of identification. Said aim is achieved in that the method of person identification by an iris of the eye includes recording color image of an iris of the eye and its subsequent processing in several various spectral (color) ranges with forming an identification code by a wave length of an optical radiation reflected from each iris of the eye element; herewith, the fact of identification of a person is considered acknowledged in case of matching of the identification codes. Said aim is achieved in that the method of person identification by an iris of the eye includes recording color image of an iris of the eye in several spectral (color) ranges and its subsequent processing in the same various spectral ranges with forming an identification code by a calculated value of a wave length of an optical radiation reflected from each iris of the eye element; herewith, the fact of identification of a person is considered acknowledged in case of matching of the identification codes.

## Description

The inventions relate to the technology of protecting different objects from access by unauthorized personnel by means of identification of an individual on the basis of an image of the iris of the eye of said individual and can be used in the diagnosis of the state of organs and functional systems in an organism on the basis of the iris of the eye.

A method is known of person identification by its iris of the eye image, comprising recording images of an iris of the eye of the persons and forming on the basis of them a database which is used afterwards for person identification. Each image before being loaded into the database undergoes processing in the computer with the help of special software and is stored in the form of a certain data set. To realize the process of identification of an individual, his iris of the eye image is recorded and stored, and the fixed image is processed and compared with the images stored in the database (WO 03/049010).

The shortcoming of the known method of a person identification lies in its relatively low accuracy, because for identification of an individual only one set of characteristic features (i.e., only one code) is used.

A method is known of person identification by his iris of the eye image, comprising recording images of an iris of the eye of persons and forming on the basis of them a database which is used afterwards for person identification. Therewith, in the process of registering image of the iris, the eye is illuminated by a narrow spectral range optical radiation. As the source of the illumination the semiconductor sources are used. Each image before being loaded into the database undergoes processing in the computer with the help of special software and is stored in the form of a certain code. To realize the process of identification of an individual, his iris of the eye image is recorded and stored, and the fixed image is processed and compared with the images stored in the database (JP10137220).

The shortcoming of the known method of a person identification lies in its relatively low accuracy, because for identification of an individual only one set of characteristic features (i.e., only one code) is used.

A method is known of identification of a person by his iris of the eye, which is as follows. It was found that the use of illumination of one spectral range, due to the differences in coloring of image of the eye pigment, in some cases does not allow to determine accurately the boundary between the white and the iris of the eye; besides, a number of the characteristic features of the iris of the eye can not be disclosed because of a low contrast when the illumination is used, since the illumination wavelength is close to the color of these elements. Therefore, in the known method, the eye of a person being identified, is illuminated at first with a light close to IR, the iris pigment color is detected, and, depending on the result, the optical emission source wavelength is selected, which will be used for illumination of the iris at the moment of recording its image. As a result of processing the image, the corresponding code is formed which is stored in the database and used for comparing with a current code value generated upon re-registration of the iris image of a person being identified (JP 2006031185).

The disadvantage of the known method of person identification, in spite of the fact, that obtained codes contain information on more characteristic features, is its relatively low accuracy, since only one set of characteristic features (i.e., only one code) is used for identification of an individual.

The most close to the applied method are the methods of person identification by an iris of the eye described in RU 2326589. One of the methods comprises recording of an iris of the eye color image with its subsequent processing in several different spectral (color) ranges and forming an identification code for each of them; the fact of identification of a person is considered acknowledged in case of matching of the identification codes in all processed spectral ranges. The second method includes recording of an iris of the eye image in several spectral (color) ranges with its subsequent processing in the same several different spectral ranges and forming an identification code for each of them; the fact of identification of a person is considered acknowledged in case of matching of the identification codes in several or in all processed spectral ranges.

A shortcoming of the known person identification methods is the fact that, although the obtained codes include information on a more number of characteristic elements, they also include redundant information, since they are obtained from a single, practically independent space that increases the total code length, and as a result, increases retrieval time from a database.

The claimed methods of person identification by an iris of the eye are aimed at improving accuracy and speed of identification.

Said aim is achieved in that the method of person identification by an iris of the eye includes recording color image of an iris of the eye and its subsequent processing with forming an identification code, the elements of which are determined in accordance with a wave length of the reflected optical radiation from each iris of the eye element; herewith, the fact of identification of a person is considered acknowledged in case of matching of the identification codes.

Said aim is achieved also by the fact that in the process of image recording an iris of the eye is illuminated with optical radiation, spectral range of which is close to the white light.

Said aim is achieved also by the fact that the illuminating radiation is concentrated in a region of the recording system focus.

Said aim is achieved also by the fact that the illuminating radiation is concentrated on the obtained image maximally inside pupillary zone.

Said result is achieved also by the fact that illuminating radiation intensity is modulated.

Said aim is achieved in that the method of person identification by an iris of the eye includes recording color image of an iris of the eye in several spectral ranges and its subsequent processing in the same various spectral ranges with forming an identification code by a calculated value of a wave length of the reflected optical radiation from each iris of the eye element; herewith, the fact of identification of a person is considered acknowledged in case of matching of the identification codes.

Said aim is achieved also by the fact that in the process of an iris of the eye recording in each of the spectral ranges it is illuminated with an optical radiation, the spectral range of which corresponds to the spectral range of recording.

Said aim is achieved also by the fact that the illuminating radiation is concentrated in a region of the recording system focus.

Said aim is achieved also by the fact that the illuminating radiation is concentrated on the obtained image maximally inside pupillary zone.

Said aim is achieved also by means of modulating intensity of illuminating radiation, at least, in one of the spectral ranges.

Registration of an iris of the eye color image and its subsequent processing with formation of an identification code, the elements of which are determined in accordance with a wave length of the optical radiation reflected from each iris of the eye element, allows to use a previously not used/ incorrectly used color information component contained in the recorded iris of the eye image.

The use in the iris registration process of an optical radiation illumination, spectral range of which is close to the colorless light, improves the identification accuracy, since, on the one hand, allows to receive the iris color image practically without distortion of the spectral characteristics of its elements, and, on the other hand, to select sufficiently high number of the spectra (or spectral lines, or spectral ranges), in which processing of the image can be performed.

It is preferable to concentrate the illuminating radiation in a zone of the recording system, as in this case the illuminating system will be used in the most efficient way with its tending to minimum power consumption. It also increases the identification accuracy, since it may be used as a visual positioning of an iris of the eye in the recording area.

Improving person identification accuracy also may be provided by concentration of the illuminating radiation maximally inside the pupillary zone, since it makes possible to obtain an iris of the eye image with minimal optical interference (artifacts) on the effective area of the obtained iris of the eye image.

Besides, modulation of the illuminating radiation intensity makes it possible to determine whether the person being identified is using contact lens, and/or an eye the iris image of which is analyzed belongs not to an alive person, but to a moulage or a corps.

The second proposed person identification method, just as well, as the first one, allows to improve person identification accuracy, and is based on a similar concept, that is, it provides for recording an iris of the eye image in several spectral ranges and its subsequent processing in the same several spectral ranges with forming an identification code by the calculated wave length of the optical radiation reflected from each iris of the eye image, that allows to use various types of the combined illuminators and to perform color correction in the most efficient way.

If the first method provides for formation of an identification code, the elements of which are determined in accordance with the optical radiation reflected from each iris of the eye element, then the second method provides for formation of an identification code by a calculated wave length of the optical radiation reflected from each iris of the eye element.

In order to further improve person identification accuracy, it is preferable to illuminate an iris of the eye in the process of its recording with an optical radiation, spectral range of which corresponds to the spectral range of the recording. In this case, improvement of accuracy is provided by the certain spectral components determined with the help of the illumination characteristics, specific to various types of the iris (brown, grey, or mixed type).

Just as well, as in the first method, it is preferable to concentrate the illuminating radiation in a zone of the recording system, as in this case the illuminating system will be used in the most efficient way with its tending to minimum power consumption. It also increases the identification accuracy, since it may be used as a visual positioning of an iris of the eye in the recording area.

In the first method all the illuminating radiation flux is modulated in intensity, since it is the only one; as for the second method, taking into account the fact that several iris of the eye images are recorded in the various spectral ranges, and illumination is performed by optical radiation of various ranges, it is possible to modulate the radiation of just one spectral range, or of a combination of several various radiation bands. The main task is to provide the highest and the most effective pupillary zone response to the modulated iris of the eye illumination intensity.

The essence of the claimed methods is illustrated by embodiment examples.

Example 1. In the most general case, the first identification method defined by the claim 1 is realized in the following way. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s. The obtained image is converted to a digital form and transmitted to a PC with appropriate software installed (see. WO/03/053123). According to the image processing program, the PC on the basis of the recorded color image is forming a code, which is stored in the database as a reference code. Later, when there is a problem of identification of a person to permit access or passage, for example, to a guarded zone, some deposit, while crossing the borders of states, the described above procedure is repeated, except that the code obtained during identification is compared with those already stored in the database, and in the case of coincidence of the codes, the person being identified is permitted to access or to pass.

Example 2. In the particular case, the first method can be implemented as follows. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s; therewith, during the process of the iris of the eye recording, it is illuminated with an optical radiation of a spectral range close to colorless light spectral range. For this purpose, various well known radiation sources can be used, such as super-bright LEDs of a certain emission range, or some other sources. Since an optimal illumination is to be carried out in such a way that the radiation was concentrated, on the one hand, in the registering system focus zone, and on the other hand, on the obtained iris of the eye image maximally inside the pupillary zone, the illumination means should be located maximally close to the area where recording takes place, but if possible, not to fall within it. The obtained image is converted to digital form and transmitted to a PC with appropriate software (for example, see PrivateID® from Iridian Technologies is an image processing and data protocol standard that enables a Proof Positive-Certified iris camera to capture an image, process it and prepare it for transport in the most secure way possible. Iris recognition is the most accurate, non-invasive and easy to use biometric for secure identification. http://www.iridiantech.com/products.php?page=1, or RU 2326589).

According to the image processing program, the computer forms several monochrome images from the recorded color image, and determines characteristics of each image being analyzed. Basing on determination of the characteristics and iris of the eye images analysis, the code is formed which is saved as a reference code in the database. Later, when there is a problem of identification of a person to permit access or passage, for example, to a guarded zone, some deposit, while crossing the borders of states, the described above procedure is repeated, except that the code obtained during identification is compared with those already stored in the database, and in the case of complete coincidence of the codes, the person being identified is permitted to access or to pass.

Example 3. In another particular case, ensuring maximum achievement of the results, the first method may be implemented in the following way. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s; therewith, during the process of the iris of the eye recording, it is illuminated with an optical radiation of a spectral range close to colorless light spectral range. For this purpose, various well known radiation sources can be used, such as super-bright LEDs of a certain emission range, or some other sources. Since an optimal illumination is to be carried out in such a way that the radiation was concentrated, on the one hand, in the registering system focus zone, and on the other hand, on the obtained iris of the eye image maximally inside the pupillary zone, the illumination means should be located maximally close to the area where recording takes place. The obtained image is converted to a digital form and transmitted to a PC with appropriate software installed (http://www.iridiantech.com/products.php?page=1).

According to the image processing program, the PC on the basis of the recorded color image is forming a code, which is stored in the database as a reference code. Later, when there is a problem of identification of a person to permit access or passage, for example, to a guarded zone, some deposit, while crossing the borders of states, the described above procedure is repeated, except that the code obtained during identification is compared with those already stored in the database, and in the case of coincidence of the codes (to required extent), the person being identified may be permitted to access or to pass. But before giving the permission, it is necessary to make the iris of the eye image was obtained from an eye of the alive person, but not from his moulage. For this purpose, the illuminating radiation intensity is modulated, and the image recording system monitors pupil response to modulation, for what time of the recoding is slightly increased.

Example 4. In one the options the first identification method was implemented as follows. The person being identified was placed in a field of view of a color TV camera (such as Sanyo VCC-6592P TV camera) with analog output, which via the conversion unit digitalizes the signal and sends it to a digital output, connected to the personal computer input. During recording of the iris of the eye image it was illuminated with an optical radiation spectral range of which was close to the colorless light. For this purpose the necessary light sources were used. The radiation sources were located maximally close to the area where recording takes place, but so that not to fall within it, and so that the radiation was concentrated, on the one hand, in the registering system focus zone, and on the other hand, on the obtained iris of the eye image maximally inside the pupillary zone. The obtained image was converted by the conversion unit to digital form and passed to a personal computer with installed software enabling processing the image.

Via separating the necessary spectra (in RGB-image the red, green and blue main color spectra may be separated; additional color spectra from the main color spectra also may be separated with the help of the software, that is, instead of one color iris of the eye image of a person being identified, it is possible to produce three main monochrome images in the red, green and blue color spectra, and several additional monochrome images also may be produced, for instance, in yellow and light-blue color spectra, that allows for the most accurate characterization of the iris of the eye color and determination of specific features of the iris of the eye in various color spectra). As a result of processing the images, the computer by the recorded color image formed three monochrome images (red, blue, and green images) and determined specific color characteristics of each image being analyzed. Basing on determination of the characteristics and iris of the eye images analysis, the code was formed which was saved as a reference code in the database. To check operation of the method the person being identified was again subjected to the above-mentioned identification procedure. Upon completion of the procedure, the obtained code was compared with the code stored in the database. As a result, the full coincidence of the codes was observed.

Example 5. In one the options the first identification method was implemented as follows. The person being identified was placed in a field of view of a color TV camera (such as Sanyo VCC-6592P TV camera) with analog output, which via the conversion unit digitalizes the signal and sends it to a digital output, connected to the personal computer input. During recording of the iris of the eye image it was illuminated with an optical radiation spectral range of which was close to the colorless light. For the purpose, the so-called super-bright radiation sources (for example, Al171v3) were used. The radiation sources were located maximally close to the area where recording takes place, so that not to fall within it, and so that the radiation was concentrated, on the one hand, in the registering system focus zone, and on the other hand, on the obtained iris of the eye image maximally inside the pupillary zone. The obtained image was converted to digital form by the conversion unit and passed to a personal computer with installed software allowing for determination of the necessary spectral components used in the identification process. As a result of the recorded color image processing, the computer formed an identification code, the components of which in accordance with the wavelength of illuminating radiation reflected by each iris of the eye element. Afterwards, the identification code was saved as a reference code. To check operation of the method the person being identified was again subjected to the above-mentioned identification procedure. Upon completion of the procedure, the obtained code was compared with the code stored in the database. As a result, the full coincidence of the codes was observed, which means, that the identified person may be granted an access or a passage, for example, into the protected zone. But before giving the permission, it is necessary to make the iris of the eye image was obtained from an eye of the alive person, but not from his moulage. To test the effectiveness of the method, a color photograph of the iris of the eye of the person being identified was produced. Since it is necessary to modulate the illuminating radiation intensity, the two tests were conducted, where in one case the identified person was placed in the field of view, and in the other case - a moulage of the eye of the identified person. During the process of recording both images, both the eye and the moulage were illuminated with a radiation of modulated frequency, selected from the conditions of the pupil response to the variable frequency. In the present case, it was 20 Hz, and was applied during the time period of not more than 1 s. For the purpose, a value of the feed current supplied to the super-bright LEDs was changed. The image continuously recorded by the TV camera was transferred to the computer with image processing software allowing for recording pupil diameter changes. As a result, when image of the eye of the alive person was recorded, a message, confirming the fact was displayed on the computer monitor. Inversely, when the moulage was placed into the TV camera field of view, the computer determined the fact and issued the signal banning passage into the protected zone.

Example 6. In the most general case, the second identification method defined by the claim 6 is realized in the following way. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s. An eye of a person to be identified is placed in a field of view of the recording means, and its iris is registered successively in certain color (yellow, green, blue, etc.). The obtained images are converted to digital form and uploaded to a personal computer with appropriate software installed. Based on the analysis of the iris of the eye monochrome images, a code is generated (a wave length of the reflected optical radiation of each iris of the eye element by means of computer processing of an array of the obtained images), which is saved in a database as a reference code. Later, when there is a problem of identification of a person to permit access or passage, for example, to a guarded zone, some deposit, while crossing the borders of states, the described above procedure is repeated, except that the code obtained during identification is compared with those already stored in the database, and in the case of complete coincidence of the codes, the person being identified is permitted to access or to pass.

Example 7. In the particular case, the second method can be implemented as follows. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s. An eye of a person to be identified is placed in a field view of the recording means and illuminated in succession with an optical radiation of various wave lengths, which could correspond certain colors (red, yellow, green, blue, etc.). Accordingly, with the help of the recording means and a computer connected to it, several iris of the eye images are recorded, each of which at the moment of recording was illuminated with an optical radiation of a certain color. The obtained images are converted to digital form and uploaded to a personal computer with appropriate software installed. Based on the analysis of the iris of the eye monochrome images, (forming an identification code by a calculated wave length value of the optical radiation reflected from each iris of the eye element by computer processing of an array of the obtained images), a code is generated which is saved in a database as a reference code. Known radiation sources may be used for an eye illumination at the moment of recording its monochrome images, such as various LEDs or radiation sources with appropriate filters. Since an optimal illumination is to be carried out in such a way that the radiation was concentrated, on the one hand, in the registering system focus zone, and on the other hand, on the obtained iris of the eye image maximally inside the pupillary zone, the illumination means should be located maximally close to the area where recording takes place, but as far as possible, not to fall within it.

Later, when there is a problem of identification of a person to permit access or passage, for example, to a guarded zone, some deposit, while crossing the borders of states, the described above procedure is repeated, except that the code obtained during identification is compared with those already stored in the database, and in the case of complete coincidence of the codes, the person being identified is permitted to access or to pass.

Example 8. In another particular case, ensuring maximum achievement of the results, the second method may be implemented in the following way. A person to be identified is placed in a field of view of the recording means, allowing to obtain a high-quality color image of the iris of the eye. As such means, a color TV camera with a digital output may be used, or a digital camera allowing to take pictures in small time intervals, of the order of 0.001 s. An eye of a person to be identified is placed in a field view of the recording means and illuminated in succession with an optical radiation of various wave lengths, which may correspond certain colors (red, yellow, green, blue, etc.). Accordingly, with the help of the recording means and a computer connected to it, several iris of the eye images are recorded, each of which at the moment of recording was illuminated with an optical radiation of a certain color. The obtained images are converted to digital form and uploaded to a personal computer with appropriate software installed. Based on the analysis and calculation of the wave length of the radiation reflected from each iris of the eye element, a code is generated which is saved in a database as a reference code. Known radiation sources may be used for an eye illumination at the moment of recording its monochrome images, such as various LEDs or radiation sources with appropriate filters.

Since an optimal illumination is to be carried out in such a way that the radiation was concentrated, on the one hand, in the registering system focus zone, and on the other hand, on the obtained iris of the eye image maximally inside the pupillary zone, the illumination means should be located maximally close to the area in which recording takes place. On the basis of selection and analysis of the monochrome iris of the eye images, the codes for each of them is formed, which are stored in a database as the reference codes. Later, when there is a problem of identification of a person to permit access or passage, for example, to a guarded zone, some deposit, while crossing the borders of states, the described above procedure is repeated, except that the code obtained during identification is compared with those already stored in the database, and in the case of coincidence of the codes, the person being identified may be permitted to access or to pass. But before giving the permission, it is necessary to make the iris of the eye image was obtained from an eye of the alive person, but not from his moulage. For this purpose, the illuminating radiation intensity is modulated, at least, in one of the spectral ranges (color), and the image recording system monitors pupil response to modulation, for what time of the recoding is slightly increased.

Example 9. In one the options the second identification method was implemented as follows. The person to be identified was placed in a field of view of a color TV camera with a digital output after conversion of the signals, connected to the PC input. An eye of the person to be identified was illuminated in succession with an optical radiation of various wave lengths, corresponding to certain colors (red, green, and blue). Accordingly, with the help of the recording means and a computer connected to it, these three iris of the eye images were recorded, each of which at the moment of recording was illuminated with the optical radiation of the color, in which the recording was performed. For this purpose, certain radiation sources were used (super-bright LEDs, that is, BSOL445-1HGB for the red spectrum of illumination, BB445-1F for the blue spectrum, and BGD1445-1L5 for the green spectrum of illumination). The radiation sources were located circumferentially maximally close to the area where recording takes place, but so that not to fall within it, and so that the radiation of all illumination sources was concentrated, on the one hand, in the registering system focus zone, and on the other hand, on the obtained iris of the eye image maximally inside the pupillary zone. The obtained image was digitalized by the camera and passed to the PC with a software allowing to analyze several obtained monochrome images and calculate wave length values of optical radiation reflected from each iris of the eye element.

As a result of processing the three monochrome images of red, blue and green iris of the eye images, a code was created, which was stored in a database as a reference code. To check operation of the method the person being identified was again subjected to the above-mentioned identification procedure. Upon completion of the procedure, the obtained code was compared with the code stored in the database. As a result, the required coincidence of the codes was observed, which means, that the identified person may be granted an access or a passage, for example, into the protected zone.

But before giving the permission, it is necessary to make the iris of the eye image was obtained from an eye of the alive person, but not from his moulage. To test the effectiveness of the method, a color photograph of the iris of the eye of the person being identified was produced. To check the pupil response to light, it is necessary to modulate intensity of the illuminating radiation. Two tests were performed; in one of them, an eye of alive person to be identified, and in the other test - his eye moulage were placed in the recording means field of view. In the process of recording the images, both the eye and its moulage were illuminated with a modulated intensity radiation, of blue and green colors simultaneously. For this purpose, the changing feed current magnitude was supplied to the LEDs of the corresponding colors (BB445-1F for blue spectrum, and BGD1445-1L5 for green spectrum of illumination). The image continuously recorded by the TV camera was transferred to the computer with image processing software allowing for recording pupil diameter changes. As a result, when image of the eye of the alive person was recorded, a message, confirming the fact was displayed on the computer monitor. Inversely, when the moulage was placed into the TV camera field of view, the computer determined the fact and issued the signal banning passage into the protected zone.

## Claims

1. A method of person identification by an iris of the eye, comprising recording color image of an iris of the eye and its subsequent processing with forming an identification code, the elements of which are determined in accordance with a wave length of the reflected optical radiation from each iris of the eye element; herewith, the fact of a person identification is considered acknowledged in case of matching of the identification codes.

2. The method according to claim 1, **characterized in that** in the process of image recording an iris of the eye is illuminated with optical radiation, spectral range of which is close to the colorless light.

3. The method according to claim 2, **characterized in that** the illuminating radiation is concentrated in a region of the recording system focus.

4. The method according to claim 2, **characterized in that** the illuminating radiation is concentrated on the obtained image maximally inside pupillary zone.

5. The method according to claim 2, **characterized in that** the intensity of the illuminating radiation is modulated.

6. A method of person identification by an iris of the eye, including recording color image of an iris of the eye in several spectral ranges and its subsequent processing in the same various spectral ranges with forming an identification code by a calculated value of a wave length of the optical radiation reflected from each iris of the eye element; herewith, the fact of a person identification is considered acknowledged in case of matching of the identification codes.

7. The method according to claim 6, **characterized in that** in the process of an iris of the eye recording in each of the spectral ranges it is illuminated with an optical radiation, spectral range of which corresponds to the spectral range of recording.

8. The method according to claim 7, **characterized in that** the illuminating radiation is concentrated in a region of the recording system focus.

9. The method according to claim 7, **characterized in that** the illuminating radiation is concentrated on the obtained image maximally inside pupillary zone.

10. The method according to claim 7, **characterized in that** intensity of illuminating radiation is modulated, at least, in one of the spectral ranges.
